# FASCICULE DE BREVET EUROPEEN

(11) **EP 0 538 078 B1**
(45) Date de publication et mention de la délivrance du brevet: **27.05.1998**
(21) Numéro de dépôt: 92401921.9
(22) Date de dépôt: 03.07.1992
(51) Int. Cl.: H02J 3/14

(54) **Procédé de gestion globale de la puissance électrique dans un réseau au sein d'un local et système pour la mise en oeuvre du procédé**
Verfahren zur globalen Steuerung der elektrischen Leistung in einem elektrischen Netzwerk eines Gebäudes und System zur Ausführung dieses Verfahrens
Method for a global management of electrical power in an electric network for a building and system for carrying out this method

(30) Priorité: 14.10.1991 FR 9112604
(43) Date de publication de la demande: 21.04.1993
(73) Titulaire: EURO CP s.a.r.l., 94300 Vincennes (FR)
(72) Inventeur: Gilbert, Jérôme, F-92300 Levallois Perret (FR)
(74) Mandataire: Pontet, Bernard

(56) Documents cités:
- EP-A- 0 265 342
- EP-A- 0 372 961
- FR-A- 2 349 989
- FR-A- 2 404 326
- GB-A- 2 071 438
- IEEE INTERNATIONAL CONFERENCE ON CONSUMER ELECTRONICS 6-8 JUIN 1990, Rosemount, Illinois, US, pp 238-239; J. KELLY ET AL.: 'A Residential Energy Management Test Using CEBus'

## Description

La présente invention concerne un procédé de gestion de la puissance électrique dans un réseau au sein d'un local. Elle vise également un système pour sa mise en oeuvre.

La gestion de la puissance électrique dans un réseau au sein d'un local consiste à limiter la puissance totale prélevée sur le réseau électrique à une valeur inférieure à la somme des puissances de tous les appareils installés dans cette construction sans que l'utilisateur ne soit gêné par cette limitation.

On entend par local, tout type de construction individuelle ou collective, à usage privé, public ou professionnel. On entend par réseau tout type de réseau domotique mettant en oeuvre un support quelconque de communication.

Il s'agit pour les acquéreurs d'un système domotique de réduire les dépenses engagées envers leur distributeur d'énergie électrique. La diminution des coûts consécutive à la gestion de la puissance es directement liée à la politique tarifaire du distributeur d'électricité. Ainsi, lorsqu'il existe un abonnement dont le coût est lié à la puissance souscrite, la gestion de la puissance permet d'opter pour un abonnement à une puissance inférieure à celle qui serait normalement nécessaire. Lorsque le prix de l'énergie dépend de la puissance totale délivrée à l'installation, la gestion de la puissance permet d'éviter d'atteindre des paliers tarifaires au delà desquels l'énergie est plus coûteuse. En plus de son intérêt économique, la gestion de puissance trouve également une justification dans le supplément de confort apporté par la suppression des risques de disjonction intempestive par surcharge du réseau électrique.

La gestion de la puissance est réalisée actuellement généralement soit au moyen d'une installation électrique spéciale de communication et de commande qui nécessite un câblage spécifique et offre peu de possibilité d'évolution du système, soit en utilisant directement le réseau électrique intérieur comme support de communication en utilisant la technique bien connue des courants porteurs.

On connaît déjà par la demande de brevet européen EP-A-0372961 au nom de HONEYWELL INC un procédé de commande de délestage/relestage utilisant des techniques d'anticipation pour un réseau domotique. Cette demande de brevet divulgue le préambule des revendications 1 et 6. On connaît également par la demande de brevet britannique GB-A-2071438 au nom de CENTRO RICERCHE FIAT S.P.A. un système de distribution d'énergie électrique comprenant une unité de commande agencée de façon à surveiller à la fois la puissance que peut délivrer la système et la puissance demandée par les charges pour leur fonctionnement.

Tous ces procédés présentent l'inconvénient de nécessiter la mise en oeuvre d'une mesure systématique de puissance et font appel à une comparaison entre une puissance mesurée, globale ou partielle, et une consigne de puissance. De plus, les unités de gestion des systèmes divulgués dans les documents précités génèrent des ordres de délestage-relestage suivant des critères de priorité préétablis sans possibilité de compromis ou de transaction entre ces unités de gestion et les appareils délestables. En outre, les systèmes de gestion de puissance selon l'art antérieur mettent en oeuvre des commutateurs additionnels extérieurs aux appareils commandés et nécessitent un câblage spécifique.

Le but de la présente invention est de remédier à ces inconvénients en proposant un procédé de gestion de la puissance électrique dans un réseau domotique auquel sont reliés des appareils pouvant communiquer entre eux de manière bidirectionnelle, chaque appareil comprenant au moins un sous-ensemble de puissance et un sous-ensemble de commande, un desdits appareils, dit gestionnaire de puissance, étant agencé pour gérer des fonctions de délestage et de relestage desdits appareils, chaque appareil délestable étant a priori délesté, ces fonctions de délestage et de relestage visant uniquement lesdits sous-ensembles de puissance de chaque autre appareil, toute demande d'une puissance électrique significative par un appareil préalablement délesté conduisant à une transaction entre ledit appareil et le gestionnaire de puissance au cours de laquelle ledit appareil délesté demandeur fournit au gestionnaire de puissance des informations indicatives de la puissance demandée par ledit appareil demandeur, le gestionnaire de puissance autorisant ou non, à l'issue de ladite transaction le relestage du sous-ensemble de puissance dudit appareil demandeur.

Suivant l'invention, le procédé de gestion de puissance comprend en outre une estimation de la puissance électrique effectivement engagée sur le réseau à partir des informations fournies au cours des transactions de relestage par les appareils demandeurs ou des sous-ensembles d'appareils demandeurs et à partir des informations de diminution de la puissance effectivement engagée par un appareil préalablement autorisé à être relesté, toute autorisation de relestage étant prise par le gestionnaire de puissance en fonction, d'une part, de ladite estimation de la puissance engagée sur le réseau, et d'autre part, d'une information sur la puissance totale cumulée à ne pas dépasser.

Ainsi, avec le procédé selon l'invention, toute opération de relestage fait l'objet d'une demande de l'appareil demandeur qui est traitée par le gestionnaire de puissance, fait l'objet d'une négociation entre eux sur la base d'informations directement fournies par l'appareil demandeur sans qu'il soit nécessaire d'effectuer systématiquement une mesure instantanée de la puissance réellement consommée. En outre, du fait que chaque appareil est à priori délesté, il est lors possible d'effectuer des commandes en temps masqué.

L'estimation de la puissance électrique engagée permet ainsi au gestionnaire de puissance de prendre les décisions d'autorisation de relestage en toute sécurité puisqu'il dispose alors d'une marge de sécurité permettant d'éviter tout risque d'atteinte du seuil de disjonction.

Selon une autre caractéristique avantageuse du procédé selon l'invention, tout appareil délestable, qui a été préalablement autorisé à être relesté, informe le gestionnaire de puissance de toute diminution significative de la puissance effectivement utilisée par son sous-ensemble de puissance, toute augmentation significative de la puissance par un appareil préalablement relesté étant en outre soumise à une demande d'augmentation auprès du gestionnaire de puissance et ne devenant effective qu'après autorisation dudit gestionnaire de puissance.

Suivant un autre aspect de l'invention, il est proposé un système de gestion globale de la puissance électrique dans un réseau domotique auquel sont reliés des appareils pouvant communiquer de manière bidirectionnelle, parmi lesquels un appareil dit gestionnaire de puissance et des appareils dits délestables, chaque appareil comprenant un sous-ensemble de commande comportant des moyens de contrôle et de traitement, notamment un microcontrôleur, des moyens de mémoire non volatile et réinscriptible, des moyens de transmission bidirectionnelle adaptés au réseau, et chaque appareil délestable comprenant en outre au moins un sous-ensemble de puissance délestable et relestable, les sous-ensembles de commande respectifs de chaque appareil délestable étant agencés pour effectuer, à l'occasion de chaque demande de puissance par ledit appareil délestable, une transaction avec le gestionnaire de puissance, à l'issue de laquelle ledit gestionnaire de puissance autorise ou non le relestage du sous-ensemble de puissance dudit appareil demandeur, et pour fournir audit gestionnaire de puissance, via lesdits moyens de transmission bidirectionnelle et ledit réseau, des informations indicatives de la puissance demandée par le appareil délestable, ce système mettant en oeuvre le procédé selon l'une des revendications 1 à 5, il est caractérisé en ce que le gestionnaire de puissance est agencé pour délivrer une autorisation de relestage d'une part en fonction d'une estimation de la puissance électrique effectivement engagée sur le réseau obtenue à partir des informations fournies au cours des transactions de relestage pour les appareils demandeurs et à partir des informations de diminution de la puissance effectivement engagée par un appareil préalablement autorisé à être relesté, et d'autre part en fonction d'une information sur la puissance totale cumulée à ne pas dépasser.

D'autres particularités et avantages de l'invention apparaîtront encore dans la description ci-après; Aux dessins annexés à titre d'exemples non limitatifs:
- la figure 1 représente une vue synoptique des sous-ensembles fonctionnels de base d'un gestionnaire de puissance mis en oeuvre dans le procédé selon l'invention;
- la figure 2 représente une vue synoptique des sous-ensembles fonctionnels de base d'un appareil délestable pouvant mettre en oeuvre le procédé selon l'invention;
- la figure 3 représente le schéma-bloc du sous-ensemble de commande d'un appareil délestable pouvant mettre en oeuvre le procédé selon l'invention;
- la figure 4 décrit la manière dont évoluent les différentes puissances au cours du temps dans un exemple d'application du procédé selon l'invention;
- la figure 5 illustre un exemple de réseau domotique pouvant donner lieu à la mise en oeuvre du procédé selon l'invention;
- la figure 6 représente la structure d'un message émis par le gestionnaire;
- la figure 7 rassemble des chronogrammes illustrant les étapes essentielles de dialogue entre des appareils communicants et le gestionnaire, dans un mode d'équirépartition temporelle de l'énergie au sein d'un réseau.

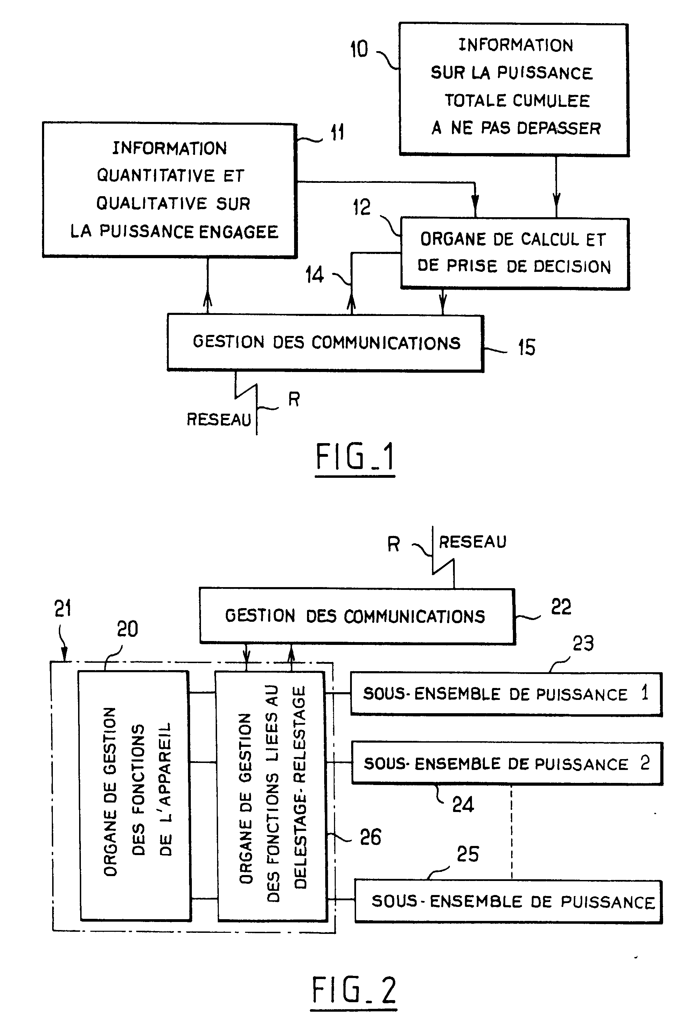

On va maintenant décrire de façon détaillée le procédé de gestion de puissance selon l'invention en même temps qu'un système pour sa mise en oeuvre, en référence aux figure 1 à 7.

Un gestionnaire de puissance mis en oeuvre dans la présente invention présente nécessairement les fonctionnalités suivantes, en référence à la figure 1:
- la gestion de communications 15 avec un réseau R, par exemple un réseau de distribution électrique, auquel il est relié,
- la réception 11 d'informations quantitatives et qualitatives sur les puissances engagées par les différents appareils relestés,
- la détention 10 d'informations sur la puissance totale cumulée à ne pas dépasser sur le réseau,
- et des fonctions 12 de calcul et de prise de décision concernant les opérations de délestage-relestage.

Chaque appareil délestable relié au réseau domotique R comprend, en référence à la figure 2, un sous-ensemble de commande 21, au moins un sous-ensemble de puissance 23,24,25, et une unité 22 de gestion de communications au sein du réseau R. Chaque sous-ensemble de puissance 21 comprend généralement un premier organe de gestion 20 des fonctions spécifiques dudit appareil et un second organe de gestion 26 des fonctions spécifiques de gestion de puissance relié à chacun des sous-ensembles de puissance 23,24,25 et à l'unité de gestion de communications 22.

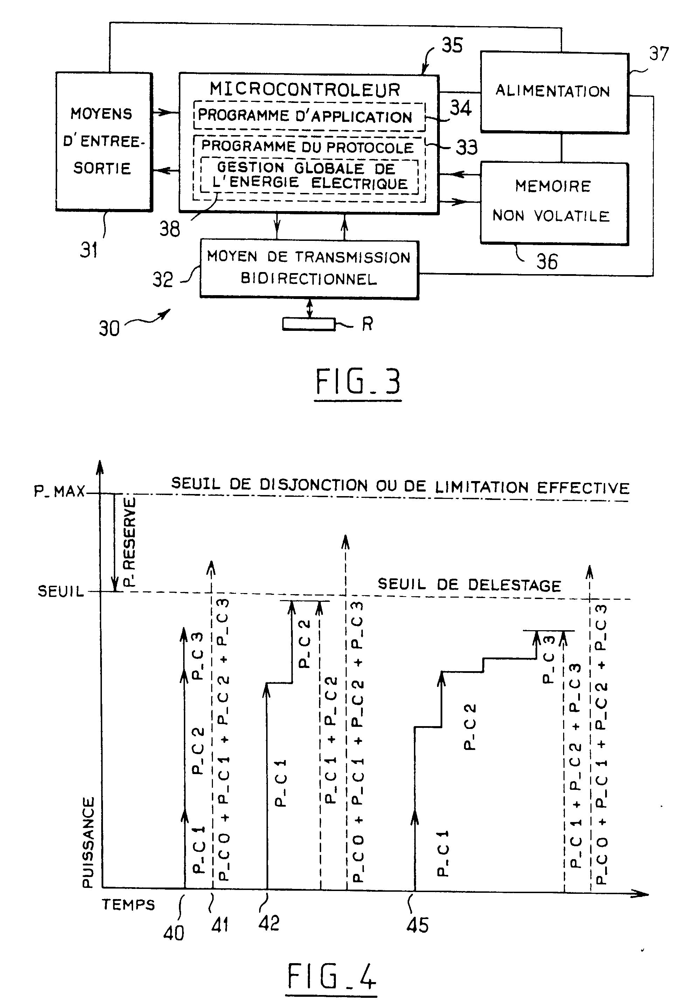

Le gestionnaire de puissance comprend, en référence à la figure 3, un module de commande 30 incluant une interface de transmission bidirectionnelle 32, des moyens d'entrée-sortie 31 consistant généralement en un clavier et en des afficheurs, une unité d'alimentation électrique 37, une mémoire non volatile de préférence inscriptible 36, par exemple une mémoire RAM sauvegardée, une mémoire EEPROM ou une mémoire FLASH et une unité de contrôle et de traitement 35 réalisée de préférence par un microcontrôleur ou par tout autre moyen équivalent, qui coopère avec l'ensemble des autres composants du module de commande 30. L'unité de contrôle et de traitement 35 contient généralement dans une mémoire morte un logiciel comprenant un programme d'application 34, un programme de gestion de protocole de communication 33 et un programme de gestion de puissance 38.

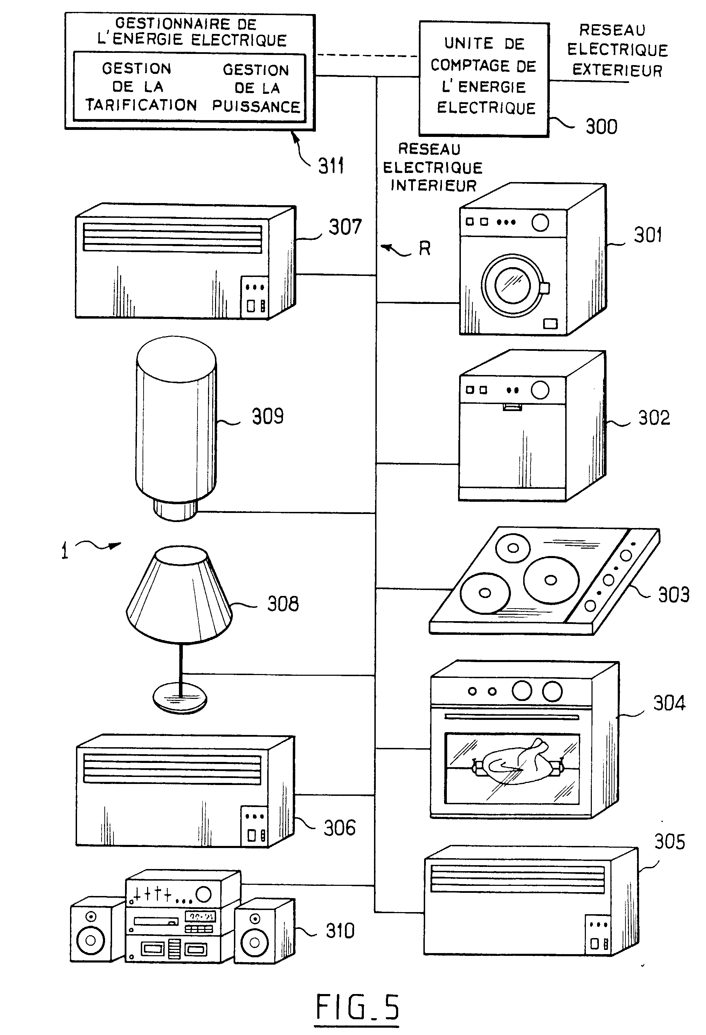

Un exemple pratique de gestion de puissance au sein d'un réseau domotique R incluant un ensemble d'appareils délestables 301-307 dont la puissance peut être gérée selon l'invention, en référence à la figure 5, est illustré sous la forme d'un graphique en figure 4. les appareils délestables 301-307 reliés au réseau R sont répartis en trois classes de puissance engagée PC1, PC2 et PC3, tandis que les appareils dont la puissance n'est pas gérée par le procédé selon l'invention 308-310 sont affectés en classe 0.

La classe 0 regroupe les appareils qui ne sont pas concernés par le procédé selon l'invention. Cette classe concerne des appareils non communicants, des appareils communicants mais de manière non compatible avec le gestionnaire de puissance , ou encore des appareils communicants de manière compatible avec le gestionnaire de puissance mais dont le niveau de puissance ne justifie pas leur gestion par le procédé selon l'invention, par exemple, certains appareils de petit électroménager, d'éclairage de faible puissance et audio-vidéo.

La classe 1 comprend les appareils dont la puissance est gérée avec le procédé selon l'invention et qui nécessitent la présence d'un utilisateur pendant les périodes de consommation électrique. Cette classe regroupe des appareils dont l'alimentation en énergie est prioritaire, par exemple des appareils de préparation des aliments et de cuisson.

La classe 2 comprend les appareils dont la puissance est contrôlée avec le procédé selon l'invention et qui sont à fonctionnement autonome et intermittent, par exemple, les lave-linge, sèche-linge et lave-vaisselle. ces appareils présentent généralement une faible inertie thermique ou ne tolèrent peu ou pas d' interruptions de l'alimentation de leurs sous-ensembles de puissance pendant leur cycle de fonctionnement.

La classe 3 inclut des appareils pouvant être gérés selon l'invention et présentant un cycle de fonctionnement qui peut être interrompu sans difficulté. Ces appareils peuvent être délestés sur demande des appareils de classe 2 et 1.

Dans l'exemple illustré par la figure 5, les appareils représentés se répartissent entre classes de la façon suivante:
Classe 0: une chaîne audio 310 et des lampes d'éclairage 308,309,
Classe 1: un four 304 et une plaque de cuisson 303,
Classe 2: un lave-linge 301 et un lave-vaisselle 302,
Classe 3: un chauffe-eau 309 et des convecteurs électriques 305,306,307.

Le réseau domotique R est relié au réseau électrique extérieur via une unité 300 de comptage de l'énergie électrique et comprend un appareil gestionnaire de l'énergie électrique 311 qui intègre les fonctions de gestion de puissance et de gestion de la tarification. La demande de brevet européen EP-A-0 582 012 déposée en même temps que la présente demande au nom du même déposant décrit un procédé de gestion de tarification pouvant être appliqué à un réseau domotique en coopération avec le procédé de gestion de puissance selon l'invention.

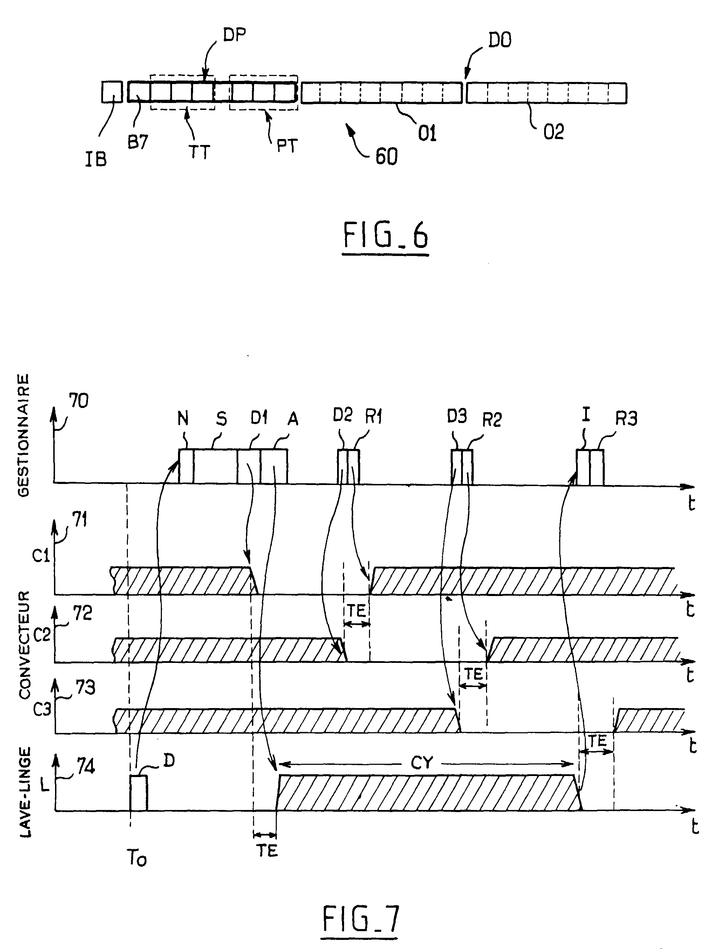

Ce procédé de gestion de tarification met en oeuvre l'émission par le gestionnaire de puissance 311 de messages d'informations tarifaires 60, en référence à la figure 6 qui illustre un exemple de structure de tels messages.

Ainsi, le message 60 d'information tarifaire comprend:
- une information binaire IB,
- un octet descripteur d'événement tarifaire principal DP,
- et une information optionnelle à caractère prédictif DO.

L'information binaire IB indique si l'événement tarifaire peut être classé dans la catégorie "tarif normal" ou "tarif économique".

le descripteur principal DP est codé sur un octet dont, par exemple, les bits 0 à 2 indiquent un palier tarifaire PT, les bits 4 à 6 indiquent un type de tarif TT et le bit B7 indique s'il s'agit d'un préavis de changement (bit7=0) ou d'un changement effectif de tarif (bit7=1), le bit 3 étant une information binaire.

L'information optionnelle à caractère prédictif est basée sur l'observation des différents changements de tarif pendant la période de 24 heures qui précède le moment d'émission de chaque message d'information tarifaire. Seuls les changements d'état tarifaire effectifs sont pris en compte, à l'exclusion des préavis. L'information optionnelle DO est constituée d'un ou deux blocs de deux octets chacun O1, O2, selon que le nombre de changements d'état tarifaire observé dans les 24 heures qui précèdent est égal à 1, 2 ou plus.

En référence à la figure 4, le gestionnaire de puissance 311 est supposé à un instant initial connaître la puissance Pmax souscrite au près du distributeur d'énergie électrique et une puissance de réserve correspondant à la consommation d'appareils non délestables et qui peut être modifiée par l'utilisateur du système. On suppose qu'à un instant initial ,une lampe 308 est allumée, le four 304 fonctionne, le lave-linge 301 et le lave-vaisselle 302 sont en marche ainsi que le chauffe-eau 309 et un convecteur 310. La somme 40 des puissances engagées par l'ensemble des appareils délestables en fonctionnement est PC1+PC2+PC3 qui est alors inférieure au SEUIL de délestage, tandis que la somme totale 41 de la puissance engagée incluant les appareils non délestables dépasse le seuil mais est inférieure à la limite de disjonction.

Si à l'instant 42, une demande de mise en marche de la plaque de cuisson 303 est effectuée, un dialogue s'établit conformément à l'invention entre cet appareil et le gestionnaire de puissance 311. La puissance demandée par l'appareil est telle que la somme des appareils délestables des classes 1,2 et 3 dépasse le seuil de délestage. Compte tenu de la valeur de la puissance de la classe 2, le délestage de la classe 3 seule ne suffit pas pour pouvoir relester l'appareil demandeur 303. le gestionnaire envoie alors un ordre de délestage pour tous les appareils des classes 2 et 3 puis autorise le relestage du demandeur 303; Tous les appareils délestés tentent alors d'envoyer une demande de relestage dans un ordre déterminé qui leur est propre. La classe 2 est toujours prioritaire par rapport à la classe 3. A l'instant 45, la plaque de cuisson 303 est arrêtée, un message est automatiquement envoyé par cet appareil 303 pour signaler son changement d'état et la réception de ce message déclenche une procédure de demande de relestage pour tous les appareils 302,309,307 dont le relestage avait été refusé au cours de la session précédente.

Dans le cas où le réseau domotique ne comprend pas de gestionnaire de puissance ou si celui-ci est hors d'état de fonctionnement, les appareils délestables sont inconditionnellement placé en mode relesté et leur mise en marche n'est soumise à aucune restriction si ce n'est la limite classique de disjonction.

Dans le cas où le réseau domotique comprend un gestionnaire de puissance, les appareils délestables sont par défaut en mode délesté et toute mise en marche du sous-ensemble de puissance d'un de ces appareils doit faire l'objet d'une autorisation par le gestionnaire de puissance après une négociation.

Le gestionnaire de puissance connaît en permanence la puissance totale engagée pour chacune des classes d'appareils délestables puisque selon l'invention, chaque appareil envoie un message vers le gestionnaire de puissance lorsque son état énergétique change, les messages d'état contenant toutes les informations caractéristiques de l'appareil et étant examinés par le gestionnaire de puissance qui en retour effectue les traitements suivants:
- s'il s'agit d'un appareil qui vient d'être relesté, la valeur de la puissance totale engagée pour la classe à laquelle appartient l'appareil concerné est augmentée de la puissance indiquée dans le message reçu;
- s'il s'agit d'un appareil qui vient d'être délesté, la valeur de la puissance totale engagée pour la classe à laquelle appartient l'appareil est diminuée de la puissance indiquée;
- s'il s'agit d'un appareil délestable qui vient d'être arrêté, la valeur de la puissance totale engagée pour la classe à laquelle appartient l'appareil est diminuée de la puissance indiquées dans la message.

Dans un autre mode avantageux de mise en oeuvre du procédé selon l'invention, le gestionnaire de puissance a toute latitude, en dehors de toute demande émise par un appareil, pour délester des appareils, notamment de classe 3, et en effectuer une gestion équirépartie dans le temps. A titre d'exemple non limitatif et en référence à la figure 7, on peut citer un système de chauffage comportant plusieurs convecteurs C1-C3 qui sont tour à tour délestés et relestés dans le respect de la limite totale de puissance engagée, pour permettre, par exemple, à un lave-linge L d'effectuer un cycle ininterrompu, sans provoquer de réduction perceptible du conforme thermique dans l'habitat.

Ainsi, dans l'exemple illustré par la figure 7, le gestionnaire de puissance gère au sein d'une habitation la distribution d'énergie à destination de trois convecteurs C1-C3 et d'un lave-linge L, auxquels correspondent respectivement les chronogrammes 70, 71-73 et 74 qui illustrent les états et cycles de fonctionnement de chacun de ces appareils. On suppose à un instant initial To que les trois convecteurs C1-C3 sont en marche et que le lave-linge L, qui appartient à la classe 2, émet à destination du gestionnaire une demande D de mise en marche. A l'issue de la réception N de cette demande, le gestionnaire effectue une simulation S du niveau total d'énergie à engager pour satisfaire la demande de mise en marche du lave-linge, et si ce niveau total s'avère supérieur au seuil de délestage, entreprend de délester un ou plusieurs convecteurs, pour permettre la mise en marche du lave-linge L. Dans l'exemple illustré, des ordres de délestage D1, D2, D3 et de relestage R1, R2, R3 vont être successivement et périodiquement émis à destination des convecteurs C1-C3 pour assurer un cycle de lavage CY sans interruption. A l'issue du cycle de lavage CY, le lave-linge L informe par un message I le gestionnaire de l'achèvement de ce cycle. Le gestionnaire émet alors un ordre de relestage R3 du dernier convecteur délesté C3 et cesse le mode de gestion d'énergie équirépartie dans le temps. Pour permettre une commutation en toute sécurité sans risque de disjonction, une temporisation TE est avantageusement prévue entre tout ordre de relestage et son exécution et déterminée en prenant en compte pour valeur minimale le temps de réponse de l'appareil le plus lent à exécuter une demande de délestage.

Bien sûr, l'invention n'est pas limitée aux exemples qui viennent d'être décrits et de nombreux aménagements peuvent être apportés à l'invention. Ainsi, le nombre d'appareils délestables reliés au réseau domotique n'est limité que par la capacité dudit réseau qui peut également accueillir d'autres appareils délestables. On peut également envisager d'autres formes de réalisation des moyens de contrôle et de traitement équipant les sous-ensembles de commande. En outre, le gestionnaire de puissance peut également assurer bien d'autres fonctions supplémentaires distinctes des opérations spécifiques de relestage-délestage.

## Revendications

1. Procédé de gestion de la puissance électrique dans un réseau (R) au sein d'un local, auquel sont reliés des appareils (301-307,311) pouvant communiquer entre eux de manière bidirectionnelle, chaque appareil comprenant au moins un sous-ensemble de puissance et un sous-ensemble de commande (30), un desdits appareils (311), dit gestionnaire de puissance, étant agencé pour gérer des fonctions de délestage et de relestage desdits appareils, chaque appareil délestable (301-307) étant a priori délesté, ces fonctions de délestage et relestage visant uniquement lesdits sous-ensembles de puissance de chaque autre appareil (301, 307), toute demande d'une puissance électrique significative par un appareil préalablement délesté (301-307) conduisant à une transaction entre ledit appareil et le gestionnaire de puissance (311) au cours de laquelle ledit appareil délesté demandeur (301-307) fournit au gestionnaire de puissance (311) des informations indicatives de la puissance demandée par ledit appareil demandeur (301-307), le gestionnaire de puissance (311) autorisant ou non, à l'issue de ladite transaction, le relestage du sous-ensemble de puissance (23, 24, 25) dudit appareil demandeur (301-307), caractérisé en ce qu'il comprend en outre une estimation de la puissance électrique effectivement engagée sur le réseau obtenue à partir des informations fournies au cours des transactions de relestage par les appareils demandeurs (301-307) ou des sous-ensembles d'appareils demandeurs (23, 24, 25) et à partir des informations de diminution de la puissance effectivement engagée par un appareil préalablement autorisé à être relesté, toute autorisation de relestage étant prise par le gestionnaire de puissance (311) en fonction d'une part de ladite estimation de la puissance engagée sur le réseau, et d'autre part, d'une information sur la puissance totale cumulée à ne pas dépasser.

2. Procédé selon la revendication 1, caractérisé en ce que tout appareil délestable (301-307), qui a été préalablement autorisé à être relesté, informe le gestionnaire de puissance (311) de toute diminution significative de la puissance effectivement utilisée par son sous-ensemble de puissance (23, 24, 25), toute augmentation significative de la puissance par un appareil préalablement relesté étant en outre soumise à une demande d'augmentation auprès du gestionnaire de puissance (311) et ne devenant effective qu'après autorisation dudit gestionnaire de puissance (311).

3. Procédé selon l'une des revendications précédentes, caractérisé en ce que l'appareil gestionnaire de puissance (311) émet une déclaration de présence à destination des appareils délestables (301-310) lors de sa mise en service sur le réseau (R), ou sur demande d'un appareil délestable (301-307) lors de sa mise en service sur le réseau (R).

4. Procédé selon la revendication 3, caractérisé en ce que lorsque aucune réponse à une demande de déclaration de présence n'est reçue par un appareil délestable (301-307) demandeur ou lorsque ledit appareil délestable (301-307) n'a obtenu aucune réponse à une demande de relestage à l'issue d'un délai prédéterminé ou d'un nombre prédéterminé de demandes, les appareils délestables (301-307) sont alors placés en permanence dans l'état relesté.

5. Procédé selon l'une des revendications 3 ou 4, caractérisé en ce que la reconnaissance d'un gestionnaire de puissance (311) au sein d'un réseau (R) par un appareil délestable (301-307) conduit à placer ce dernier dans un état normal de fonctionnement incluant nécessairement, à l'occasion de toute demande de puissance, une transaction de relestage avec ledit gestionnaire de puissance (311).

6. Système (1) de gestion globale de la puissance électrique dans un réseau domotique (R) auquel sont reliés des appareils (301-307, 311) pouvant communiquer de manière bidirectionnelle, parmi lesquels un appareil dit gestionnaire de puissance (311) et des appareils dits délestables (301-307), chaque appareil (301-307, 311) comprenant un sous-ensemble de commande (20, 23, 30) comprenant des moyens de contrôle et de traitement (35) , notamment un micro-contrôleur, des moyens de mémoire non volatile et réinscriptible (36), des moyens de transmission bidirectionnelle (32) adaptés au réseau (R), et chaque appareil délestable (301-307) comprenant en outre au moins un sous-ensemble de puissance (23, 24, 25) délestable et relestable, les sous-ensembles de commande respectifs (20, 26) de chaque appareil délestable (301-307) étant agencés pour effectuer, à l'occasion de chaque demande de puissance par ledit appareil délestable, une transaction avec le gestionnaire de puissance (311), à l'issue de laquelle ledit gestionnaire de puissance (311) autorise ou non le relestage du sous-ensemble de puissance (23, 24, 25) dudit appareil demandeur (301-307), et pour fournir audit gestionnaire de puissance (311), via lesdits moyens de transmission bidirectionnelle (32) et ledit réseau (R), des informations indicatives de la puissance demandée par ledit appareil délestable (301-307), ce système mettant en oeuvre le procédé selon l'une des revendications précédentes, caractérisé en ce que le gestionnaire de puissance est agencé pour délivrer une autorisation de relestage d'une part en fonction d'une estimation de la puissance électrique effectivement engagée sur le réseau obtenue à partir des informations fournies au cours des transactions de relestage pour les appareils demandeurs et à partir des informations de diminution de la puissance effectivement engagée par un appareil préalablement autorisé à être relesté, et d'autre part en fonction d'une information sur la puissance totale cumulée à ne pas dépasser.

7. Système (1) selon la revendication 6, caractérisé en ce que le gestionnaire de puissance (311) comprend des moyens de contrôle et de traitement (35) et des moyens de transmission bidirectionnelle (32) reliés audit réseau (R), lesdits moyens de contrôle et de traitement (35) étant agencés pour générer sur ledit réseau (R) des commandes sélectives de relestages à destination d'un appareil délestable demandeur à l'issue d'une transaction effectuée entre ce dernier et ledit gestionnaire de puissance (311).

8. Système (1) selon la revendication 7, caractérisé en ce que les moyens de contrôle et de traitement (35) du gestionnaire de puissance (311) sont agencés pour générer en permanence une estimation de la puissance effectivement engagée sur le réseau R à partir des informations fournies au cours de chaque transaction par les appareils délestables avec le gestionnaire de puissance (331), et d'informations préalables sur la puissance électrique engagée pour l'ensemble des appareils non délestables éventuellement reliés au réseau, ladite estimation pouvant être effectuée en l'absence de toute mesure physique de puissance réelle consommée par des appareils, sous-ensembles d'appareils, ou par le réseau lui-même.

## Patentansprüche

1. Verfahren zur Steuerung der elektrischen Leistung in einem Netz (R) innerhalb eines Raumes, an das Geräte (301-307, 311) angeschlossen sind, die miteinander auf bidirektionale Weise kommunizieren können, wobei jedes Gerät mindestens eine Leistungseinheit und eine Steuereinheit (30) umfaßt, wobei eines der Geräte (311), genannt Leistungssteuerer, derart angeordnet ist, um die Funktionen des Abschaltens und des Wiedereinschaltens dieser Geräte zu steuern, wobei jedes abschaltbare Gerät (301-307) ursprünglich abgeschaltet ist, wobei diese Funktionen des Abschaltens und des Wiedereinschaltens nur die Leistungseinheiten jedes anderen Geräts (301-307) betreffen, wobei jede Anforderung einer signifikanten elektrischen Leistung durch ein vorher abgeschaltetes Gerät (301-307) zu einer Transaktion zwischen dem Gerät und dem Leistungssteuerer (311) führt, während der das abgeschaltete, anfordernde Gerät (301-307) dem Leistungssteuerer (311) Informationen liefert, die auf die von dem anfordernden Gerät (301-307) angeforderte Leistung hinweisen, wobei der Leistungssteuerer (311) am Ende einer solchen Transaktion das Wiedereinschalten der Leistungseinheit (23, 24, 25) des anfordernden Geräts (301-307) genehmigt oder nicht, dadurch gekennzeichnet, daß er ferner eine Bewertung der tatsächlich in dem Netz verbrauchten elektrischen Leistung umfaßt, die aus Informationen gewonnen wird, die während der Transaktionen für die Wiedereinschaltung der anfordernden Geräte (301-307) oder der anfordernden Einheiten von Geräten (23, 24, 25) geliefert werden, und aus Informationen über die Verringerung der tatsächlich von einem Gerät verbrauchten Leistung, das vorher zur Wiedereinschaltung zugelassen wurde, wobei jede Genehmigung der Wiedereinschaltung von dem Leistungssteuerer (311) in Abhängigkeit von einerseits dieser Bewertung der im Netz verbrauchten Leistung und andererseits von einer Information über die gesamte kumulierte Leistung, die nicht überschritten werden darf, gegeben wird.

2. Verfahren nach Anspruch 1, dadurch gekennzeichnet, daß jedes abschaltbare Gerät (301-307), das vorher zur Wiedereinschaltung zugelassen wurde, den Leistungssteuerer (311) über jede signifikante Verringerung der tatsächlich von seiner Leistungseinheit (23, 24, 25) verwendeten Leistung informiert, wobei jede signifikante Erhöhung der Leistung durch ein vorher abgeschaltetes Gerät ferner einer Anforderung einer Erhöhung beim Leistungssteuerer (311) unterworfen wird und erst nach Genehmigung durch den Leistungssteuerer (311) tatsächlich eintritt.

3. Verfahren nach einem der vorhergehenden Ansprüche, dadurch gekennzeichnet, daß das Leistungssteuerungsgerät (311) eine Präsenzerklärung an die abschaltbaren Geräte (301-310) bei seiner Inbetriebnahme in dem Netz (R) oder auf Anfrage eines abschaltbaren Geräts (301-307) bei seiner Inbetriebnahme in dem Netz (R) aussendet.

4. Verfahren nach Anspruch 3, dadurch gekennzeichnet, daß, wenn ein abschaltbares anforderndes Gerät (301-307) auf eine Präsenzerklärungsanfrage keine Antwort erhalten hat oder wenn dieses abschaltbare Gerät (301-307) keine Antwort auf eine Anforderung zur Wiedereinschaltung nach einem vorbestimmten Zeitraum oder nach einer vorbestimmten Anzahl von Anforderungen erhalten hat, die abschaltbaren Geräte (301-307) ständig in den wiedereingeschalteten Zustand versetzt werden.

5. Verfahren nach einem der Ansprüche 3 oder 4, dadurch gekennzeichnet, daß die Erkennung eines Leistungssteuerers (311) innerhalb eines Netzes (R) durch ein abschaltbares Gerät (301-307) dazu führt, daß letztgenanntes in einen normalen Betriebszustand versetzt wird, was notwendigerweise bei jeder Leistungsanforderung eine Transaktion des Wiedereinschaltens mit dem Leistungssteuerer (311) einschließt.

6. System (1) zur globalen Steuerung der elektrischen Leistung in einem Hausnetz (R), an das Geräte (301-307, 311) angeschlossen sind, die auf bidirektionale Art und Weise kommunizieren können, darunter ein Gerät, Leistungssteuerer (311) genannt, und sogenannte abschaltbare Geräte (301-307), wobei jedes Gerät (301-307, 311) eine Steuereinheit (20, 23, 30) umfaßt, die Mittel zur Kontrolle und Bearbeitung (35), insbesondere einen Mikrokontroller, und energieunabhängige und wiederbeschreibbare Speichermittel (36), bidirektionale Übertragungsmittel (32), die an das Netz (R) angepaßt sind, umfaßt, und wobei jedes abschaltbare Gerät (301-307) ferner mindestens eine Leistungseinheit (23, 24, 25), die abschaltbar und wiedereinschaltbar ist, umfaßt, wobei die jeweiligen Steuereinheiten (20, 26) jedes abschaltbaren Geräts (301-307) derart angeordnet sind, daß sie bei jeder Leistungsanforderung durch dieses abschaltbare Gerät eine Transaktion mit dem Leistungssteuerer (311) durchführen, an deren Ende der Leistungssteuerer (311) das Wiedereinschalten der Leistungseinheit (23, 24, 25) des anfordernden Geräts (301-307) genehmigt oder nicht, und daß sie an den Leistungssteuerer (311) über die bidirektionalen Übertragungsmittel (32) und das Netz (R) Informationen liefern, die auf die von dem abschaltbaren Gerät (301-307) angeforderte Leistung hinweisen, wobei dieses System das Verfahren nach einem der vorhergehenden Ansprüche einsetzt, dadurch gekennzeichnet, daß der Leistungssteuerer derart angeordnet ist, daß er eine Genehmigung zur Wiedereinschaltung gibt, einerseits in Abhängigkeit von einer Bewertung der tatsächlich in dem Netz verwendeten elektrischen Leistung, die aus Informationen, die während der Transaktionen des Wiedereinschaltens für die anfordernden Geräte geliefert werden, und aus Informationen über die Verringerung der tatsächlich von einem Gerät verbrauchten Leistung, das vorher zur Wiedereinschaltung zugelassen wurde, stammt, und andererseits in Abhängigkeit von einer Information über die kumulierte Gesamtleistung, die nicht überschritten werden darf.

7. System (1) nach Anspruch 6, dadurch gekennzeichnet, daß der Leistungssteuerer (311) Mittel zur Kontrolle und Bearbeitung (35) und bidirektionale Übertragungsmittel (32) umfaßt, die mit dem Netz (R) verbunden sind, wobei die Mittel zur Kontrolle und Bearbeitung (35) derart angeordnet sind, daß sie auf dem Netz (R) selektive Befehle zur Wiedereinschaltung an ein abschaltbares anforderndes Gerät nach einer Transaktion erzeugen, die zwischen letztgenanntem und dem Leistungssteuerer (311) erfolgt ist.

8. System (1) nach Anspruch 7, dadurch gekennzeichnet, daß die Mittel zur Kontrolle und Bearbeitung (35) des Leistungssteuerers (311) derart angeordnet sind, daß sie ständig eine Bewertung der tatsächlich in dem Netz (R) verbrauchten Leistung erzeugen, aus Informationen, die während jeder Transaktion durch die abschaltbaren Geräte mit dem Leistungssteuerer (311) geliefert werden, und aus Vorinformationen über die verbrauchte elektrische Leistung für die Gesamtheit der nicht abschaltbaren Geräte, die eventuell an das Netz angeschlossen sind, wobei diese Bewertung ohne jede physikalische Messung der tatsächlich von Geräten, Einheiten von Geräten oder von dem Netz selbst verbrauchten Leistung erfolgen kann.

## Claims

1. Method for managing electric power in a network (R) within a dwelling to which appliances (301-307, 311) capable of 2-way communication with each other are connected, each appliance consisting of at least one power subassembly and one control subassembly (30), one of said appliances (311), the so-called power manager, being designed to manage load shedding and reconnection functions of said appliances, each disconnectable appliance (301-307) being disconnected a priori, these load shedding and reconnection functions only concerning said power subassemblies of each other appliance (301-307), any request for significant electric power by a previously disconnected appliance (301-307) resulting in a transaction between said appliance and the power manager (311) during which said requesting disconnected appliance (301-307) supplies the said power manager (311) with informations indicative of the power requested by said requesting appliance (301-307), said power manager (311) authorising or does not authorising, on completion of said transaction, reconnection of the power subassembly (23, 24, 25) of said requesting appliance (301-307), characterised in that it further comprises an estimate of the electric power actually committed in the network on the basis of the informations supplied during reconnection transactions by requesting appliances (301-307) or subassemblies of requesting appliances (23, 24, 25) and on the basis of informations on decrease in the electric power actually committed by an appliance previously authorised to be reconnected, any reconnection authorisation being taken by power manager (311) in function, on the one hand, of said estimate of the electric power committed in the network, and on the other hand, of an information concerning the total cumulative power to be exceeded.

2. Method according to claim 1, characterised in that any disconnectable appliance (301-307) that was previously authorised to be reconnected, informs the power manager (311) of any significant reduction in the power actually used by its power subassembly (23, 24, 25), any significant increase in power by a previously reconnected appliance also being subject to an increase request submitted to the power manager (311) and only becoming effective after it has been authorised by the said power manager (311).

3. Method according to one of the above claims, characterised in that the power manager (311) emits a presence declaration to the disconnectable appliances (301, 310) when it is put into operation within the said network (R) or at the request of the said disconnectable appliance (301-307) when it is put into operation within the said network (R).

4. Method according to claim 3, characterised in that if no response to a presence declaration request is received by a requesting disconnectable appliance (301-307) or when the said disconnectable appliance (301-307) obtains no response to a reconnection request on expiry of a predetermined delay or on completion of a predetermined number of requests, the disconnectable appliances (301-307) are then continuously set to the reconnected state.

5. Method according to one of claims 3 or 4, characterised in that the recognition of a power manager (311) within network (R) by a disconnectable appliance (301-307) results in the latter being set to a normal operating state which necessarily includes, in the even of any power request, a reconnection transaction with the said power manager (311).

6. System (1) for globally managing electric power in a home network (R) to which appliances (301-307, 311) capable of 2-way communication with each other, including a so-called power manager unit (311) and so-called disconnectable appliances (301-307) are connected, each appliance (301-307, 311) consisting of a control subassembly (20, 23, 30) comprising means of control and processing (35), in particular a microcontroller, nonvolatile, rewriteable memory (36), means of bi-directional transmission (32) suitable for the network (R) and each disconnectable appliance (301-307) also comprising at least one disconnectable and reconnectable power subassembly (23, 24, 25), the respective control subassemblies (20, 26) of each disconnectable appliance (301-307) being designed to carry out, on the occasion of each power request made by said disconnectable appliance, a transaction, with the power manager (311), on completion of which said power manager (311) authorizes or does not authorize the reconnection of the power subassembly (23, 24, 25) of said requesting appliance (301-307), and to supply to said power manager (311), via said means of bi-directional transmission (32) and said network (R), with information indicative of the power requested by said disconnectable appliance (301-307), with this system implementing the method according to one of the above claims, characterised in that the power manager is designed to deliver a reconnection authorization, on the one hand, in function of an estimate of the electric power actually committed in the network obtained from information supplied during the connection transactions for the requesting appliances and from the informations on decrease in the electric power actually committed by an appliance that has been previously authorized to be reconnected, and on the other hand, in function of an information on the total cumulative power not be exceeded.

7. System (1) according to claim 6, characterised in that the power manager (311) comprises means of control and processing (35) and means of bi-directional transmission (32) linked to the said network (R), said means of control and processing (35) being designed to generate in said network (R) selective reconnection commands intended for a requesting disconnectable appliance on completion of a transaction carried out between the latter and said power manager (311).

8. System (1) according to claim 7, characterised in that the means of control and processing (35) of the power manager (311) are designed to continuously generate an estimate of the power actually committed in the network (R) on the basis of informations supplied during each transaction by disconnectable appliances with the power manager (311) and previous informations on the electric power commitment for all the non-disconnectable appliances which may be connected to the network, it being possible to make said estimate in the absence of any physical measurement of the real power consumed by the appliances, subassemblies of appliances or by the network itself.
